# EUROPEAN PATENT SPECIFICATION

(11) **EP 3 344 440 B1**
(45) Date of publication and mention of the grant of the patent: **09.03.2022**
(21) Application number: 16766720.3
(22) Date of filing: 30.08.2016
(51) Int. Cl.: B29C 64/40, B33Y 50/00, G06F 17/00

(54) **SYSTEM AND METHOD OF PROVIDING FORCE COMPENSATION POINTS ON MODELS DURING 3D PRINTING**
SYSTEM UND VERFAHREN ZUR BEREITSTELLUNG VON KRAFTKOMPENSATIONSPUNKTEN AUF MODELLEN WÄHREND EINES 3D-DRUCKS
SYSTÈME ET PROCÉDÉ DE FOURNITURE DE POINTS DE COMPENSATION DE FORCE SUR DES MODÈLES PENDANT L'IMPRESSION 3D

(30) Priority: 30.08.2015 US 201562211868 P; 31.08.2015 US 201562211876 P
(43) Date of publication of application: 11.07.2018
(73) Proprietor: Materialise NV, 3001 Leuven (BE)
(72) Inventor: TROUKENS, Johan, B-3001 Leuven (BE); EGGERS, Gerald, B-3001 Leuven (BE)
(74) Representative: DeltaPatents B.V.
(86) International application number: PCT/US2016/049363
(87) International publication number: WO 2017/040458

(56) References cited:
- US-A1- 2013 053 995
- US-A1- 2015 066 178

## Description

### CROSS REFERENECE(S) TO RELATED APPLICATION(S)

This application claims the benefit of and priority to (1) U.S. Provisional Application No. 62/211,868, filed August 30, 2015; and (2) U.S. Provisional Application No. 62/211,876, filed August 31, 2016.

### BACKGROUND OF THE INVENTION

### Field of the Invention

This application relates to support generation in additive manufacturing. More particularly, this application relates to systems and methods for generating auxiliary structure points which are used to add auxiliary structures to 3D models in order to compensate for forces acting upon or within the model during the 3D printing process.

### Description of the Related Technology

In additive manufacturing (commonly referred to as 3D printing), objects are printed as a series of layers. These objects are typically created as 3D computer models which are provided to the 3D printing system for printing. In certain types of 3D printing technologies and/or in certain model geometries, additional structures must be added to the model in order for it to be manufactured (e.g., 3D printed) effectively and accurately. These auxiliary structures are sometimes referred to as supports. Existing solutions for determining how and where to add these auxiliary structures are inadequate. Some existing solutions are inadequate because they are often very time consuming to implement, especially in that they often add significant time to the printing/manufacturing process. Other existing solutions are error-prone in various use cases. Accordingly, improved techniques for generating auxiliary structure points are needed.

Document US-A-20150066178 discloses a method in accordance with the preamble of claim 1.

### SUMMARY

The invention is defined by a method of generating auxiliary structure points to a 3D model as defined in independent claim 1.

### BRIEF DESCRIPTION OF THE DRAWINGS

Figure 1 is a high level view of an additive manufacturing system environment.
Figure 2 is a high level block diagram showing various components of one of the computer systems shown in Figure 1.
Figure 3 is an illustration of a 3D printing process
Figures 4A and 4B provide examples of 3D printing systems which may be used in accordance with one or more embodiments.
Figures 5A-5C are additional examples of 3D printer configurations, including bottom up resin-based 3D printing systems which may be used in accordance with one or more embodiments.
Figure 6 is a flowchart which illustrates a process for identifying a group of points on the 3D model that need to be extended with auxiliary structures to compensate for forces acting on the model during the build process.
Figure 7 is a flowchart which illustrates one process for determining areas of the part which are not self-supporting and generating supports for those areas.
Figure 8 is a more detailed view of the momentum calculations shown in Figure 6.
Figure 9A is an illustration of a 3D printed tree to which auxiliary structures may be added in order to be able to successfully print the object using a 3D printing system.
Figure 9B is an illustration of the tree shown in Figure 9 showing supports and the slice plane of a slice interposed on the tree object.
Figure 9C is an illustration of the cross-section and supports shown in Figure 9B, along with a depiction of the holding forces of the auxiliary structures.
Figure 9D is a top-down view of the slice from Figure 9B, which shows calculated additional auxiliary structure points and potential supports areas for the sliced part according to one or more embodiments.

### DETAILED DESCRIPTION OF CERTAIN INVENTIVE EMBODIMENTS

Embodiments of this application relate to system and methods which solve various problems in the art which have been identified by the inventors. The inventors have recognized that improved techniques for generating auxiliary structures are needed to solve various problems which are often encountered in 3D printing of objects. For example, auxiliary structures are often needed to support areas of the model that are not self-supporting. These areas which are not self-supporting tend to break and/or deform during this 3D printing process.

Auxiliary structures are also needed to compensate for other types forces acting on the model which cause it to break and/or deform during the 3D printing process. In particular, the inventors have observed that certain areas in a parts can deform during the 3D printing process. These deformations may be caused by thermal stresses and/or shrinkage (especially in laser melting applications). And still further, problems are also encountered when parts break away from auxiliary structures and/or the build platform during 3D printing. These problems can also be caused by thermal stresses, as well as by adhesive forces present during the printing/additive manufacturing process. In order to overcome these issues, auxiliary structure points may be added to the model in such a way as to address each of the problems described above. Using the systems and methods disclosed herein, a group of points on the model can be identified which are extended by auxiliary structures to compensate for the forces acting on or in the model during the build process.

A slice-based approach is utilized to determine auxiliary structure points to be added. The slice-based approach comprises calculating the forces active on or in each slice/layer of the design, as each layer is considered. Potential auxiliary support points can be determined based on the forces acting in the layer and/or previous layer and the forces acting on the sliced part, as well as those portions of the slice which are not self-supporting due to their configuration angle with respect to the platform. According to the disclosure, the determined forces acting on or in the layer and the gravity point (e.g., the center of gravity) of the previous layer can be used to determine momentum values. According to the disclosure the determined forces acting on or in the layer and the gravity point (e.g., the center of gravity) of the current layer are used to determine momentum values. A first momentum value may reflect the momentum in the gravity point caused by forces acting in the layer. A second momentum value may reflect the momentum in the gravity point caused by the holding force of auxiliary structure points present on that slice.

Determined momentum values are compared in order to determine whether additional auxiliary structure points are needed to compensate for the forces acting on the model. For example, if the momentum in the gravity point caused by forces acting in the layer is less than the momentum in the gravity point caused by the holding force of all auxiliary structure points present on the slice, no additional auxiliary structure points are needed. If, however, the momentum in the gravity point caused by forces acting in the layer is more than the momentum in the gravity point caused by the holding force of all auxiliary structure points present on the slice, extra auxiliary structure points can be calculated and inserted into the model.

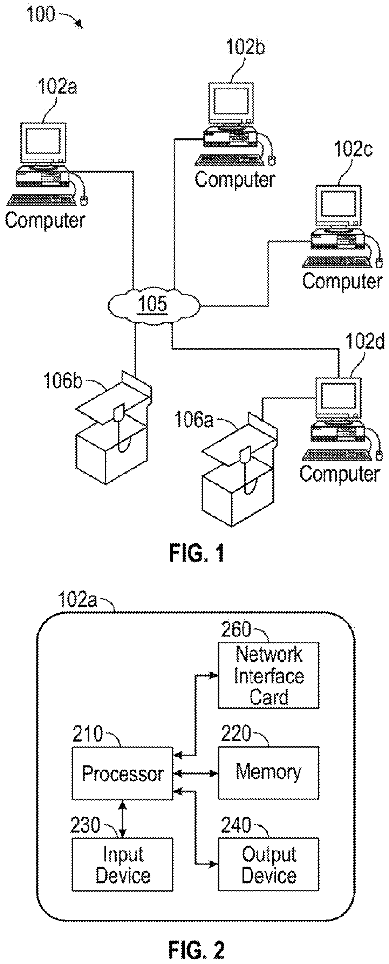

Certain inventive embodiments may be practiced in a computer-based 3D printing environment. Embodiments of the invention may be practiced within a system for designing and manufacturing 3D objects. Turning to Figure 1, an example of a computer environment suitable for the implementation of 3D object design and manufacturing is shown. The environment includes a system 100. The system 100 includes one or more computers 102a-102d, which can be, for example, any workstation, server, or other computing device capable of processing information. In some aspects, each of the computers 102a-102d can be connected, by any suitable communications technology (e.g., an internet protocol), to a network 105 (e.g., the Internet). Accordingly, the computers 102a-102d may transmit and receive information (e.g., software, digital representations of 3D objects, commands or instructions to operate an additive manufacturing device, etc.) between each other via the network 105.

The system 100 further includes one or more additive manufacturing devices (e.g., 3D printers) 106a-106b. As shown the additive manufacturing device 106a is directly connected to a computer 102d (and through computer 102d connected to computers 102a-102c via the network 105) and additive manufacturing device 106b is connected to the computers 102a-102d via the network 105. Accordingly, one of skill in the art will understand that an additive manufacturing device 106 may be directly connected to a computer 102, connected to a computer 102 via a network 105, and/or connected to a computer 102 via another computer 102 and the network 105.

It should be noted that though the system 100 is described with respect to a network and one or more computers, the techniques described herein also apply to a single computer 102, which may be directly connected to an additive manufacturing device 106.

FIG. 2 illustrates a functional block diagram of one example of a computer from FIG. 1. The computer 102a includes a processor 210 in data communication with a memory 220, an input device 230, and an output device 240. In some embodiments, the processor is further in data communication with an optional network interface card 260. Although described separately, it is to be appreciated that functional blocks described with respect to the computer 102a need not be separate structural elements. For example, the processor 210 and memory 220 may be embodied in a single chip.

The processor 210 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 210 can be coupled, via one or more buses, to read information from or write information to memory 220. The processor may additionally, or in the alternative, contain memory, such as processor registers. The memory 220 can include processor cache, including a multi-level hierarchical cache in which different levels have different capacities and access speeds. The memory 220 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 210 also may be coupled to an input device 230 and an output device 240 for, respectively, receiving input from and providing output to a user of the computer 102a. Suitable input devices include, but are not limited to, a keyboard, buttons, keys, switches, a pointing device, a mouse, a joystick, a remote control, an infrared detector, a bar code reader, a scanner, a video camera (possibly coupled with video processing software to, e.g., detect hand gestures or facial gestures), a motion detector, or a microphone (possibly coupled to audio processing software to, e.g., detect voice commands). Suitable output devices include, but are not limited to, visual output devices, including displays and printers, audio output devices, including speakers, headphones, earphones, and alarms, additive manufacturing devices, and haptic output devices.

The processor 210 further may be coupled to a network interface card 260. The network interface card 260 prepares data generated by the processor 210 for transmission via a network according to one or more data transmission protocols. The network interface card 260 also decodes data received via a network according to one or more data transmission protocols. The network interface card 260 can include a transmitter, receiver, or both. In other embodiments, the transmitter and receiver can be two separate components. The network interface card 260, can be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein.

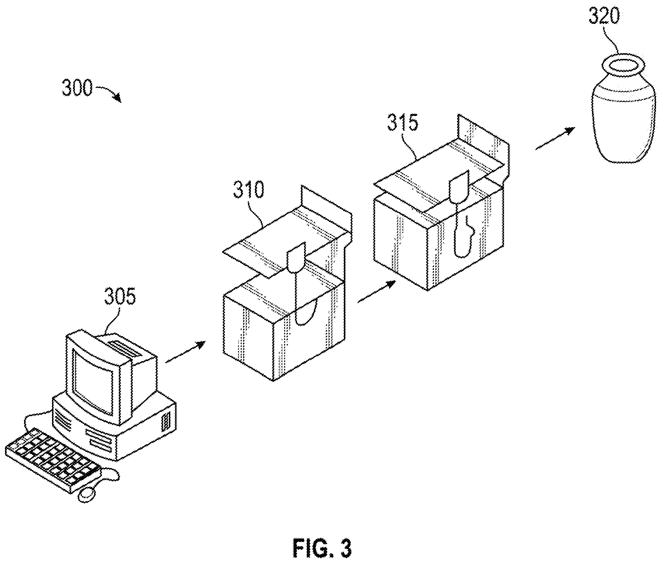

FIG. 3 illustrates a process 300 for manufacturing a 3D object or device. As shown, at a step 305, a digital representation of the object is designed using a computer, such as the computer 102a. For example, 2-D or 3D data may be input to the computer 102a for aiding in designing the digital representation of the 3D object. Continuing at step 310, information is sent from the computer 102a to an additive manufacturing device, such as additive manufacturing device 106, and the device 106 commences the manufacturing process in accordance with the received information. At step 315, the additive manufacturing device 106 continues manufacturing the 3D object using suitable materials, such as a liquid or powder resin.

These suitable materials may include, but are not limited to a photopolymer resin, polyurethane, methyl methacrylate-acrylonitrile-butadiene-styrene copolymer, resorbable materials such as polymer-ceramic composites, etc. Examples of commercially available materials are: DSM Somos^{®} series of materials 7100, 8100, 9100, 9420, 10100, 11100, 12110, 14120 and 15100 from DSM Somos; ABSplus-P430, ABSi, ABS-ESD7, ABS-M30, ABS-M30i, PC-ABS, PC ISO, PC, ULTEM 9085, PPSF and PPSU materials from Stratasys; Accura Plastic, DuraForm, CastForm, Laserform and VisiJet line of materials from 3-Systems; the PA line of materials, PrimeCast and PrimePart materials and Alumide and CarbonMide from EOS GmbH. The VisiJet line of materials from 3-Systems may include Visijet Flex, Visijet Tough, Visijet Clear, Visijet HiTemp, Visijet e-stone, Visijet Black, Visijet Jewel, Visijet FTI, etc. Examples of other materials may include Objet materials, such as Objet Fullcure, Objet Veroclear, Objet Digital Materials, Objet Duruswhite, Objet Tangoblack, Objet Tangoplus, Objet Tangoblackplus, etc. Another example of materials may include materials from the Renshape 5000 and 7800 series. Further, at step 320, the 3D object is generated.

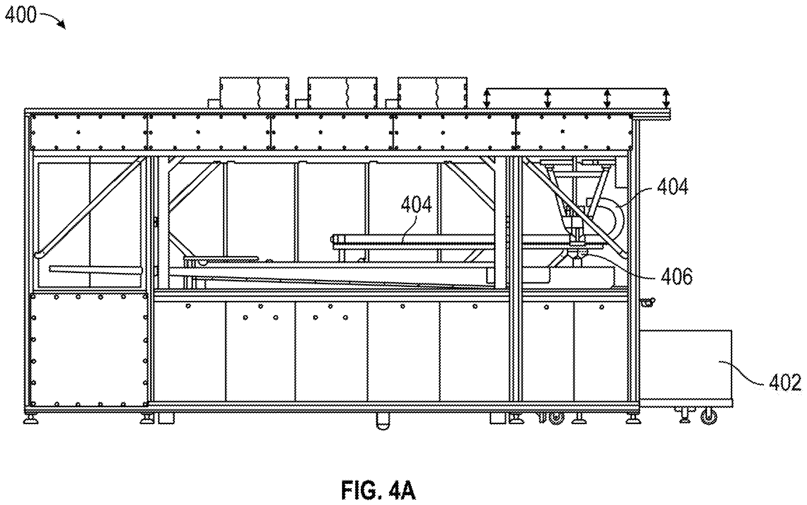

FIG. 4A illustrates an exemplary additive manufacturing apparatus 400 for generating a three-dimensional (3D) object. In this example, the additive manufacturing apparatus 400 is a stereolithography apparatus. The stereolithography apparatus 400 includes a reservoir 402 that may hold a volume of liquid, such as a resin used to build the 3D object. The stereolithography apparatus 400 further includes a transport system 404 that may be used to transport the liquid from the reservoir 402 to an object coater head 406. The transport system may include one or more tubes, pipes, or hoses configured to transport the liquid from the reservoir 402. In some embodiments, the transport system 404 may include metal or plastic materials, such as ultra-high molecular weight polyethylene (UHMWPE), polyacrylate (PA), polyvinyl chloride (PVC), or any other suitable material. Although this particular example provides a stereolithography apparatus with a transport system, a skilled artisan will appreciate that other types of stereolithography apparatuses may not use a transport system to transport resin to a build platform. Rather, the build platform may instead be configured to sink into the reservoir during the building process.

The stereolithography apparatus 400 may further include a guiding structure in the reservoir 402 configured to guide a flow of the liquid from the reservoir 402 to the transport system 404. For example, the structure may include a series of tubes or plates that are placed to strategically direct the flow of the liquid to the transport system 404. The apparatus 400 also may include a building area where the liquid resin is deposited. The building area typically includes a building area support upon which the 3D object is built.

The stereolithography apparatus 400 further includes a light source. The light source is typically included for the purpose of polymerizing the liquid to form a 3D object. The light source may take various forms. In some embodiments, the light source may be an electromagnetic light source, such as a ultra-violet (UV) light source, an infrared (IR) light source. In general, the light source may be any type of laser beam capable of solidifying the liquid.

In some implementations, the stereolithography apparatus 400 may include at least one pump used to pump the liquid from the reservoir 402 to the object coater head 406. For example, a positive displacement pump and/or a centrifugal-type pump may be used. In some embodiments, the pump may include a filter unit to add further filtration to the liquid resin prior to being deposited to the building area. In some aspects, the pump may provide a defined flow (e.g., 0.5-40 liters/min) that may be fixed or regulated via an active feedback loop. For example, the feedback loop may be direct based upon flow measurements. As another example, the feedback may be indirect using measurements of the thickness of the layers being deposited in the additive manufacturing process.

The stereolithography apparatus 400 may be used to generate one or more 3D objects layer by layer. The stereolithography machine 400, for example, may utilize a liquid resin (e.g., a photopolymer resin) to build an object a layer at a time, such as by depositing the resin from the object coater head 406 in the form of a curtain. In these implementations, the object coater head 406 may deposit successive layers of the liquid resin to form the object. Initially, the object coater head 406 may deposit a layer of the 3D object on the building area support. Subsequent layers may be then deposited on the preceding layer of the 3D object.

With the depositing of each layer, the light source, which as discussed above may be controlled by a computer, may trace a specific pattern on the surface of the liquid resin to form the dimensions of the 3D object. Exposure to the light source polymerizes, cures, or solidifies the pattern traced on the resin and adheres it to the layer below. After a coat has been polymerized, the building area support may descend by a single layer thickness and a subsequent layer pattern is traced and is adhered to the previous layer. The building process is complete when the 3D object is formed by depositing all layers of the 3D object.

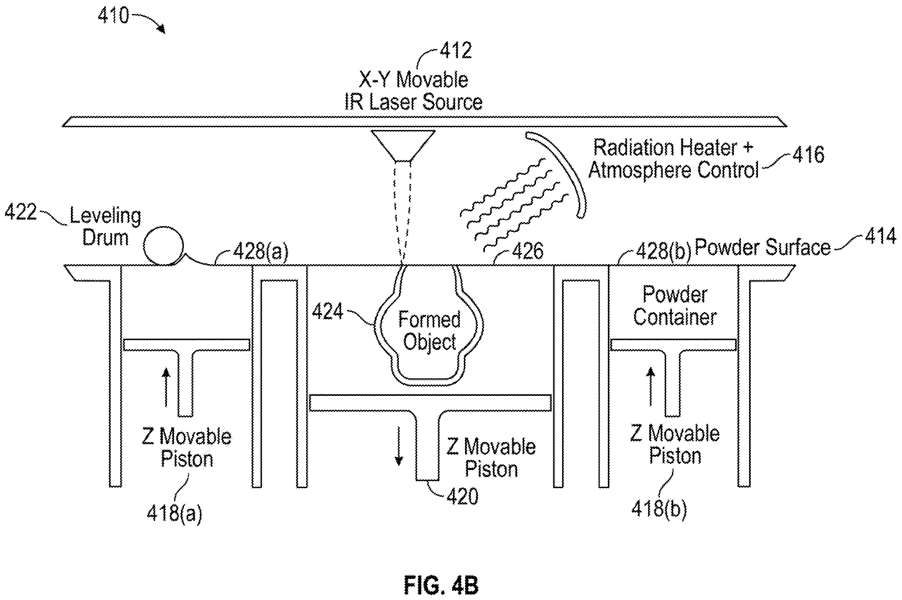

Turning now to Figure 4B, another example of an additive manufacturing apparatus is provided. In this example, the additive manufacturing apparatus is a laser sintering device 410. Like the stereolithography device, the laser sintering device 410 allows 3D objects to be built layer by layer. The layers are formed of powder, such as the powder surface 414 shown in Figure 4B. Successive powder layers are spread on top of each other using, for example, a leveling drum 422. After deposition, a computer-controlled CO2 laser beam scans the surface and selectively binds together the powder particles of the corresponding cross section of the product. In this example, the laser source 412 is an X-Y moveable infrared laser source. As such, the laser source can be moved along an X axis and along a Y axis in order to direct its beam to a specific location of the top most layer of powder. In some embodiments, the laser sintering device may further include a laser scanner (not shown in Figure 4B) which receives a laser beam from a stationary laser source 412, and deflects it over moveable mirrors to direct the beam to a specified location in the working area of the device. During laser exposure, the powder temperature rises above the glass transition point after which adjacent particles flow together to create the 3D object. The device 410 may also include a radiation heater and atmosphere control device 416. The radiation heater may be used to preheat the power between the recoding of a new power later powder layer in the scanning of that layer. The atmosphere control device may be used throughout the process to avoid undesired scenarios such as, for example, powder oxidation.

In some embodiments, the powder may be distributed using one or more moveable pistons 418(a) and 418(b) which push powder from a powder container 428(a) and 428(b) into a reservoir 426 which holds the formed object 424. The depth of the reservoir, in turn, is also controlled by a moveable piston 420, which increases the depth of the reservoir 426 via downward movement as additional powder is moved from the powder containers 428(a) and 428(b) in to the reservoir 426. The example SLA and sintering machines shown in Figure 4A and 4B each utilize a build platform which is gradually lowered into a reservoir as a device is manufactured layer-by-layer.

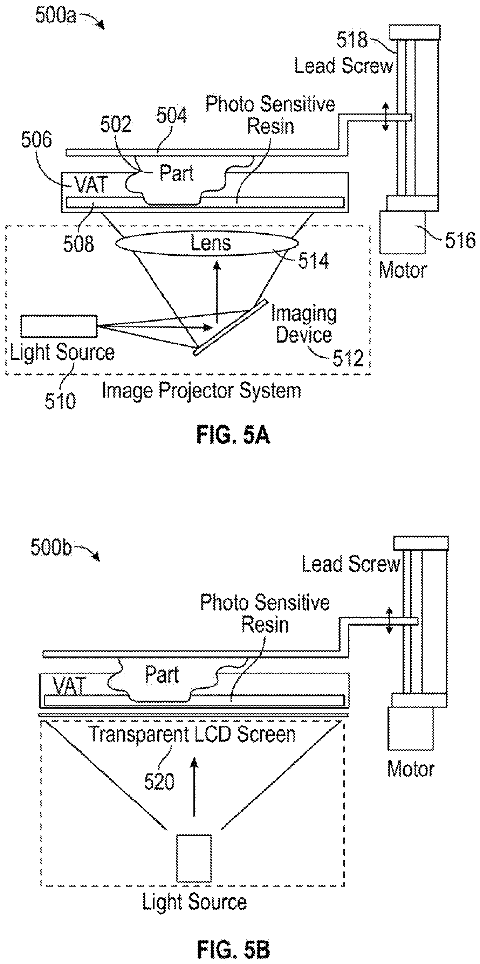

Figures 5A-5C show examples of additive manufacturing devices which utilize a different approach. In Figures 5A-5C, the additive manufacturing devices shown utilize a bottom-resin based technique (also commonly referred to as a bottom-up technique) for building an object. In bottom-resin 3D printers, each layer is created by scanning or illuminating photosensitive resin at the bottom of a vat or reservoir with a light source, such as an ultraviolet ("UV") light for example, to cure the photosensitive resin into a solidified layer. Each time a layer is created, the build platform is raised by the width (e.g, height) of a layer, and then photosensitive resin is once again exposed to the light to create another layer. This process continues until the object is manufactured in its entirety.

Turning to Figure 5A, an example of a bottom-resin 3D printer 500a having an image projection system is shown. The bottom-resin 3D printer 500a may be configured to print a part 502. The part 502 is attached to the build platform 504. The build platform 504, as explained above, may be configured to be raised by the width of a layer each time a layer has been scanned/exposed and cured. The part 502 may be positioned inside a vat 506. The vat 506 stores photosensitive resin 508 which is exposed to the light source 510 via an image projector system which also includes imaging device 512 and lens 514. Together, the light source 510, imaging device 512, and lens 514 direct the ultraviolet light to specific areas of the exposed photosensitive resin 508 in order to cure the resin which in turn creates a solid layer for the manufactured part. The build platform 504 may be driven by a motor 516 which drives a lead screw 518 (or alternatively a belt system) which precisely moves the platform each time a layer is scanned and/or exposed.

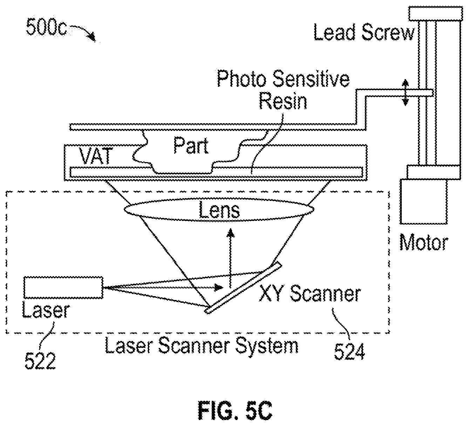

Figure 5B shows another example of a bottom-resin 3D printer 500b which may be suitable for manufacturing objects designed using the systems and methods described herein. The bottom-resin 3D printer shown in Figure 5B is largely similar to that shown in Figure 5A. However, in this example, the photosensitive resin is configured to be directly exposed to the light source via a transparent LCD screen 520. Turning now to Figure 5C, yet another example of a bottom-resin 3D printer 500c is provided. As with the bottom-resin printer 500b described with respect to Figure 5B, this bottom-resin 3D printer is largely similar to the system shown in Figure 5A. Here, the light source is replaced with a laser 522 which forms part of a laser scanning system used to cure the photosensitive resin 508. The laser 522 works cooperatively with an XY scanner 524 to direct beams of light through a lens 514 to appropriate locations of the photosensitive resin 508 in order to each layer of the object. The bottom-resin-based 3D printers, well beneficial in many ways, have certain drawbacks stemmed from their principle of design.

For example, when carrying a layer of resin, the layer tends to stick to the bottom of the tank. Thus, when the build platform is raised to remove the letter from the bottom of the tank, forces will act on the part and on any auxiliary structures created in the build process. If the stiction forces are too high, it may lead to a catastrophic failure of the build due to any one of several types of failures. On such failure occurs when auxiliary structures designed to support those areas of the object that are not self-supporting break during the build process. In addition, auxiliary structures which are used to compensate for forces acting on the model may also break due to excessive force acting on the part during the build process. In addition, there may be areas of the part which deform during the 3D printing process. These deformations may result from a layer sticking to the bottom of the tank, or they may be caused by other factors such as other types of adhesive forces or even thermal stresses (especially in the cases of laser melting and laser sintering devices). Still further, the adhesive forces present during the build process may also cause parts to break away from their auxiliary structures during the build process, and parts may even break away from the build platform.

Conventionally, these issues have been addressed using peeling systems. There are two types of peeling systems - active peeling systems and passive peeling systems. Active peeling systems seek to reduce or minimize the adhesive forces within the build process by, for example, translating and tilting the resin tank to slowly remove the adhesive force. Other active peeling systems may vibrate the resin tank to slowly remove the adhesive force. However, these active peeling systems are very time-consuming, as they make the cycle time of the machine take much, much longer. Passive peeling systems have also been used in connection with bottom-resin-based 3D printers. For example, some devices utilize a flexible tank bottom based on a silicon layer that slowly removes the adhesive force by flexing in a direction away from the cured layer. Other passive peeling systems utilize an air layer at the bottom of the tank to avoid parts sticking to the platform. These passive peeling systems have proven unreliable.

As noted above, the inventors have recognized the need for different approaches to avoiding the types of problems which occur due to excessive forces acting on a model during the build process. The inventors have conceived a process which analyzes a 3D model of an object to be printed, and utilizes calculations of the forces acting on the part to create auxiliary support points which compensate for those forces.

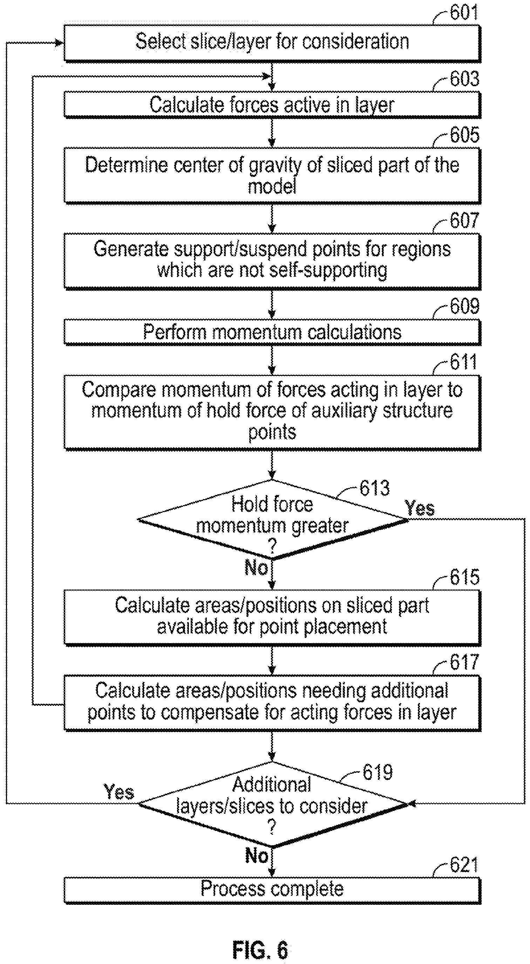

Figure 6 is a flowchart which provides illustrates how auxiliary support points may be generated to add auxiliary structures to a model to compensate for forces acting on or in the model during the 3D printing process. The process begins at block 601, where a slice/layer of the object is selected for consideration. As will be noted below, the process described in Figure 6 involves considering each layer in the object, so in the first instance, the selection of the layer for consideration will typically be the selection of the first layer in the object. Next, the process moves to block 603. There, the forces active in the selected layer are calculated. These forces may include, the adhesive forces acting on the cross section. These forces may also include the maximum force that can be exerted on an auxiliary structure which is already part of the object. In addition, these forces may also include the maximum hold force of the auxiliary structures present in the object.

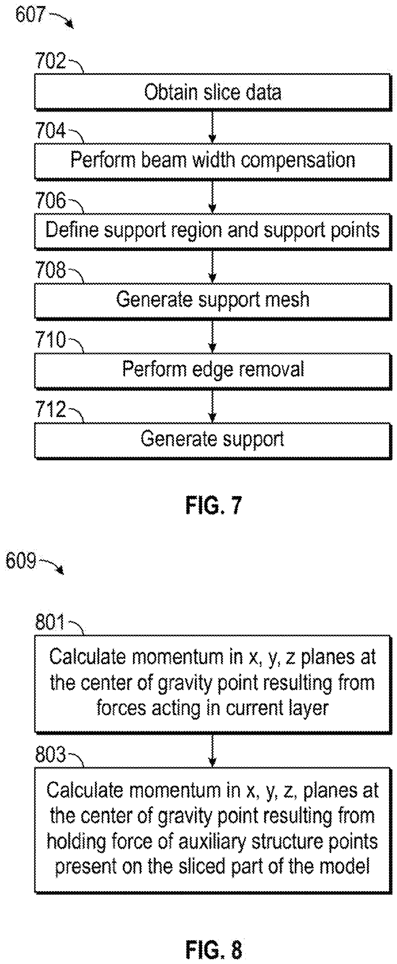

The process then continues to block 605, where the gravity point (e.g., the center of gravity) of the sliced part of the model is determined. Next, the process moves to block 607. There, supports and/or suspend structures are determined and generated for those regions which are not self-supporting. Although one particular way to provide these support structures will be described in more detail with respect to Figure 7 below, there are various techniques suitable for generating support structures for non-self-supporting regions of the model.

In general, a region that is not self-supporting is identified by the self-supporting angle of the build material and the process technology being used. Those areas of the model that make an angle toward the build platform which is smaller than the self-supporting angle will need support structures to enable the manufacture of these regions. Without the support structures, the forces acting on the structure will cause it to deform and/or collapse, thereby causing a catastrophic failure in the build. Those areas in the model that have an angle toward the build platform that is larger than the self-supporting angle do not need additional auxiliary structures to support their manufacture. Although various different techniques may be used, one suitable technique for generating support data is described in co-owned U.S. Patent No. 8,903,533.

After the support structures for the regions of the object which are not self-supporting have been generated, the process moves to block 609, where momentum calculations are performed. The momentum calculations are based on the forces acting within the slice, and the determined gravity point. Additional details regarding the momentum calculations will be described in connection with Figure 8 below. There, structures may be added which ensure the part is held to the build platform during the build process, and additional structures may also be provided which are used to prevent deformation of the part due to forces acting on the part during its manufacture. Additional details about this step will be described in connection with Figure 8 below.

Once the momentum calculations have been performed, the process then moves to block 611. There, the momentum of forces acting in the layer are compared to the momentum of hold forces present in the auxiliary structure points present on the sliced part of the model. The process then moves to decision block 613, where a determination is made as to whether the momentum caused by the holding force of the auxiliary structure points present on the sliced part of the model is greater than the momentum caused by the forces acting within the layer. If at decision block 613 the momentum caused by the holding force of the auxiliary structure points is greater than the momentum caused by the forces acting in the layer, then no additional auxiliary structure points are needed in that layer, and the process moves ahead to decision block 619. At decision block 619, the system determines whether there are additional layers in the 3D model to consider. If not, the process is complete as it moves to block 621. If so, however, the process returns to block 601, where the next layer is selected and the process repeats. Thus, this technique is a slice-based technique in which all of the layers of the object are typically considered.

Returning to decision block 613, if the momentum created by the holding force of the auxiliary structure points present in the sliced part of the model does not exceed that of the momentum caused by the forces acting in the layer, the process moves ahead to block 615. At block 615, the system calculates the areas-positions on the sliced part which are available for placing of additional auxiliary structure points. Once the available areas/positions have been identified, the process next moves to block 617 where the areas/positions in the layer needing additional auxiliary structure points are determined. These points are determined and selected in order to counteract and/or compensate for the momentum caused by the forces acting in the layer. Once the additional auxiliary structure points have been selected, it still must be determined whether they will be sufficient to allow for the successful manufacture of the object. As a result, after the additional auxiliary structure points have been determined and selected, the process returns to block 603, where the process is carried out again with the additional auxiliary structure points taken into consideration. This process continues until the momentum caused by the holding force of the auxiliary structure points exceeds that of the momentum caused by the forces acting in the layer.

Figure 7 is a more detailed example of one way that the process of determining and generating support structures for regions of the object which are not self-supporting may be carried out according to one or more embodiments. More particularly, Figure 7 is one example of a sub-process which may be used to generate the supports in block 607. The sub-process shown in Figure 7 is a slice-based process, and as such the process begins at block 702 where the slice data is created. At block 704, beam with compensation may be performed on the slice data. Next, the process moves to block 706 where the slice data is used to determine a support region and a set of support points located in the region which are suitable for connecting to the object to provide the needed support. The support region may be defined by examining which part of the layer is not supported by an underlying layer by means of Boolean operations. For example, the region of a layer that requires support may be obtained by subtracting the underlying layer of that layer from the previous layer. Further, and this noted above, the support region and support points may be defined according to methods described in U.S. Patent No. 8,903,533. Once the support regions and support points have been identified, the process may then move to block 708 where a support mesh is generated, and edge removal is performed at block 710. Once the edge removal has completed, the support may then be generated for the object by converting the mesh into a support object. This process may be repeated for each layer of the object so that each region that is not self-supporting is sufficiently accounted for when generating the object supports.

Figure 8 is a more detailed view of the process of performing momentum calculations shown in block 609 from Figure 6. The process begins at block 801, where the momentum in the X, Y, and Z planes caused by forces acting in the layer is calculated. In particular, this momentum calculation, which may be represented as Ma, provides the momentum in the gravity point (which may be represented as Pg) caused by the forces acting in the layer. Next, the process moves to block 803. There, the momentum in the X, Y, and Z plane resulting from the holding/stabilizing force of the auxiliary structure points present on the sliced part of the model is also calculated. This momentum calculation may be represented as Ms, and may be specifically determined based on the momentum at the gravity point Pg.

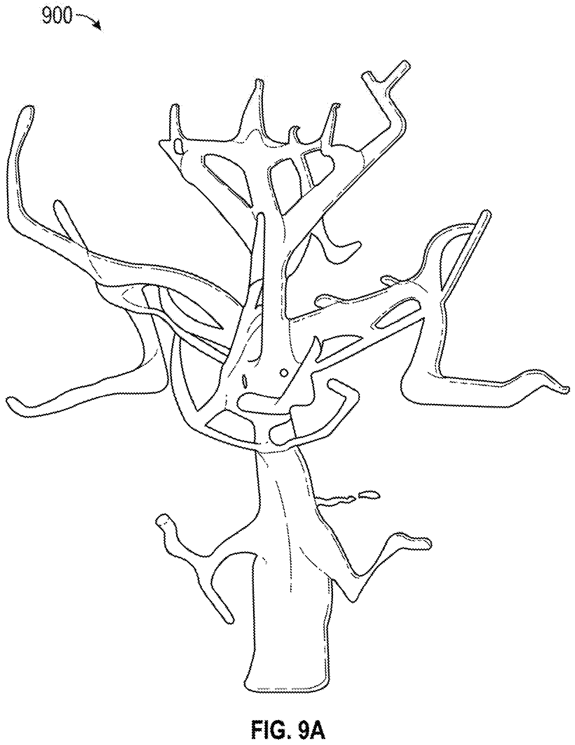

Figures 9A-9D provide an illustration of how the process of Figures 6-8 may be used to add auxiliary structures to an object (in this example, a tree) is provided. With specific reference to Figure 9A, a 3D model of a tree 900 is shown. The tree object 900 has a somewhat complex design, including several branches extending from a larger trunk which is positioned around the center of the tree object 900. As is apparent, having several different branches extending from the trunk creates many overhanging parts and regions in the design. Because the design includes these overhanging regions (which typically are not self-supporting because their angle toward the build platform is often smaller than the self-supporting angle), auxiliary structures are needed to support or suspend those areas during the build process so that there is not a catastrophic failure due to the forces acting on those regions.

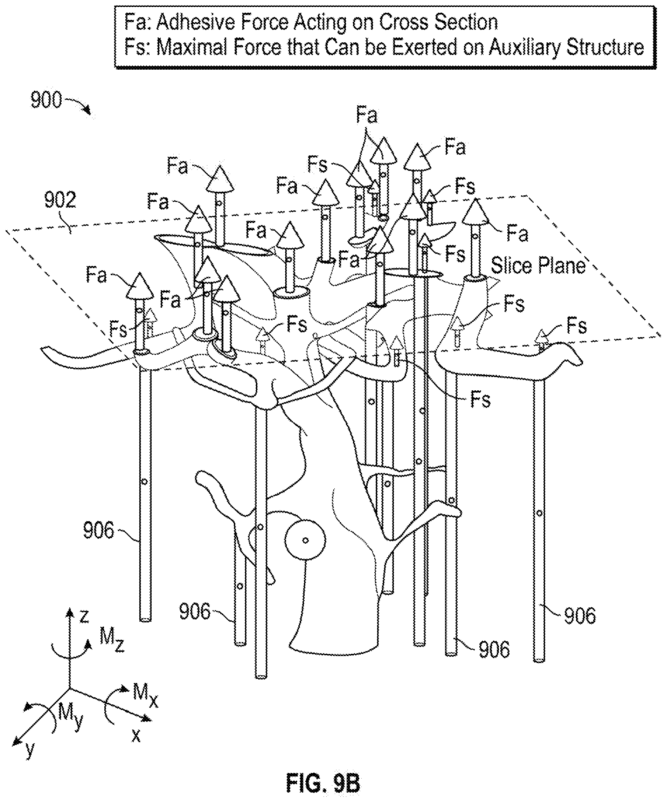

Turning now to Figure 9B, a slice plane 902 for a slice taken from the tree 900 is shown. Also shown in Figure 9B are a plurality of already present auxiliary structures 906 which have been previously added to support those regions of the object which are not self-supporting during the build process. (Although only four of the supports have a reference, the person of skill in the art will recognize that there are several additional supports 906 present in the design.) Figure 9B also illustrates the additional information about the design. In particular, it shows the forces (Fa) acting on the cross section of the slice 902. These forces generally are adhesive forces which, depending on the type of device used for printing, are adhesion to the build platform. Figure 9B also shows the maximum force (Fs) the can be exerted on the already present auxiliary structures.

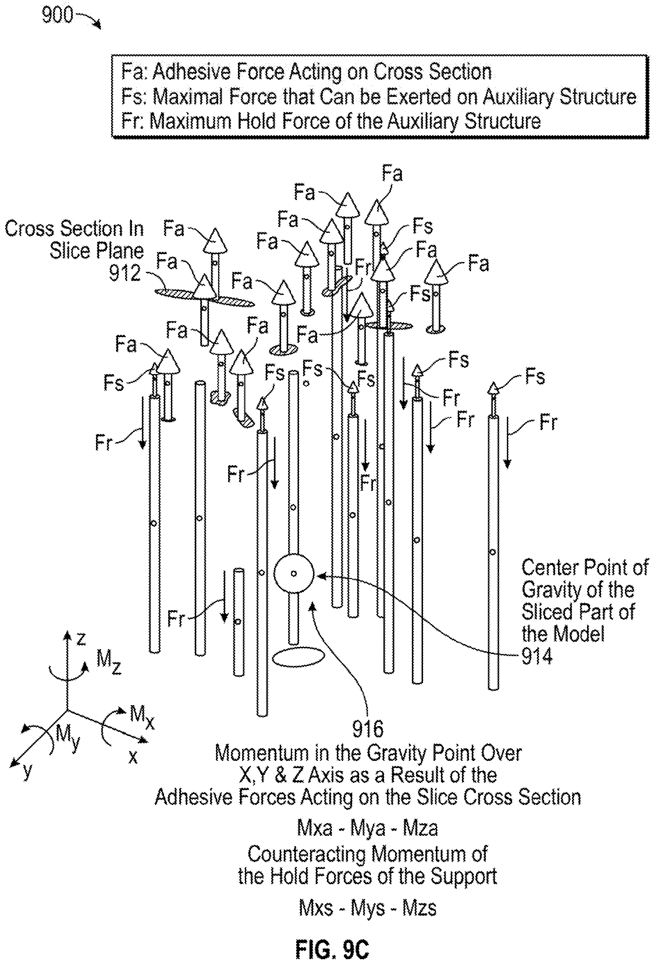

Figure 9C provides an illustration of how the momentum calculations from block 607 of Figure 6 may be carried out on an object. In particular, Figure 9C shows the tree 900 with a cross-section 912 in the slice plane 902. As shown, the forces Fa extend from these cross-sections, as they represent the adhesive forces which are present when the slice is created by build process. Figure 9C further shows the center of gravity 914 of the slice part of the model, represented by the circle having x, y, and z axes extending from it. As discussed above, the momentum calculations (shown as item 916 in Figure 9C) are performed with respect to the center of gravity, and as a result of the adhesive forces acting on the slice cross-section.

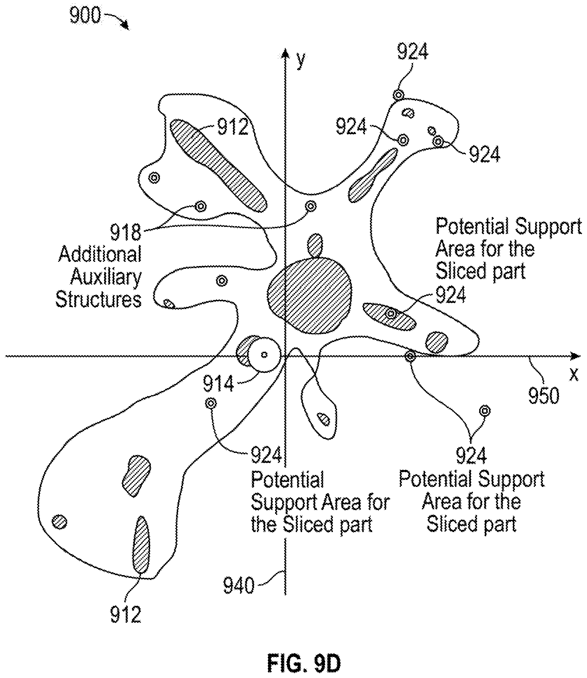

Turning now to Figure 9D, a top-down view of the slice plane 902 (showing the X axis 950 and the Y axis 940) from the tree object 900 is shown. Here, the process of determining whether additional support points are needed are shown. In particular, Figure 9D illustrates visually the changes to the model that may be proposed if the momentum calculations determine that additional supports are need. As shown, potential support areas for the sliced part 924 may be defined as possible support areas. In addition, additional auxiliary structures 918 may be placed in the layer in order to provide sufficient support to successfully build this layer during the build process.

The systems and methods disclosed herein provide several advantages over existing techniques involving peeling. In particular, using the systems and methods described herein, death formations and other structural failures caused by forces acting on or in a part during printing can be avoided. In addition, the systems and methods disclosed herein allow for the identification of parts that cannot be printed with certain auxiliary structure. These benefits are not provided by existing support generation techniques.

Although the examples above generally relate to specific types of 3D printing devices including stereolithography and selective laser melting devices, a skilled artisan will appreciate that the systems and methods disclosed herein may be utilized in many different additive manufacturing technologies. Accordingly, it is to be appreciated and recognized that these inventive embodiments should not be limited to any single type of additive manufacturing device.

Various embodiments disclosed herein provide for the use of a computer control system. A skilled artisan will readily appreciate that these embodiments may be implemented using numerous different types of computing devices, including both general purpose and/or special purpose computing system environments or configurations. Examples of well-known computing systems, environments, and/or configurations that may be suitable for use in connection with the embodiments set forth above may include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like. These devices may include stored instructions, which, when executed by a microprocessor in the computing device, cause the computer device to perform specified actions to carry out the instructions. As used herein, instructions refer to computer-implemented steps for processing information in the system. Instructions can be implemented in software, firmware or hardware and include any type of programmed step undertaken by components of the system.

A microprocessor may be any conventional general purpose single- or multi-chip microprocessor such as a Pentium^{®} processor, a Pentium^{®} Pro processor, a 8051 processor, a MIPS^{®} processor, a Power PC^{®} processor, or an Alpha^{®} processor. In addition, the microprocessor may be any conventional special purpose microprocessor such as a digital signal processor or a graphics processor. The microprocessor typically has conventional address lines, conventional data lines, and one or more conventional control lines.

Aspects and embodiments of the inventions disclosed herein may be implemented as a method, apparatus or article of manufacture using standard programming or engineering techniques to produce software, firmware, hardware, or any combination thereof. The term "article of manufacture" as used herein refers to code or logic implemented in hardware or non-transitory computer readable media such as optical storage devices, and volatile or non-volatile memory devices or transitory computer readable media such as signals, carrier waves, etc. Such hardware may include, but is not limited to, field programmable gate arrays (FPGAs), application-specific integrated circuits (ASICs), complex programmable logic devices (CPLDs), programmable logic arrays (PLAs), microprocessors, or other similar processing devices.

## Claims

1. A method of generating auxiliary structure points to a 3D model, the 3D model defined as a series of layers for printing layer by layer, the method **characterized in that** it comprises:
selecting a layer (902) in the series of layers for consideration;
calculating forces acting in the layer, the forces being due to adhesive forces between the layer and a build platform;
determining a gravity point (914) of a sliced part of the 3D model, the sliced part of the 3D model comprising the one or more layers prior to the layer in the series of layers;
comparing momentum (916) at the gravity point caused by the forces acting in the layer to momentum caused by a holding force of auxiliary structure (906) points already present on the sliced part of the 3D model; and
generating an additional auxiliary structure point when the momentum caused by the holding force is less than the momentum caused by the forces acting in the layer.

2. The method of Claim 1, wherein generating the additional auxiliary structure point comprises:
calculating a plurality of areas on the sliced part of the 3D model suitable for placement of the additional auxiliary structure point; and
selecting one of the calculated plurality of areas for placement of the additional auxiliary structure point.

3. The method of Claim 2, further comprising calculating a dimension of an auxiliary structure related to the additional auxiliary structure point.

4. The method of Claim 3, wherein the calculated dimension is associated with the momentum caused by the forces acting in the layer.

5. The method of Claim 1, further comprising:
calculating the momentum at the gravity point caused by the forces acting in the layer; and
calculating the momentum caused by the holding force of auxiliary structure points already present on the sliced part of the 3D model.

6. The method of Claim 5, wherein the momentum caused by the holding force comprises the momentum at the gravity point of the sliced part of the 3D model.

7. The method of Claim 6, wherein the momentum caused by the holding force comprises the momentum caused by the holding force in an X plane, a Y plane, and a Z plane.

8. The method of Claim 1, further comprising selecting a new layer for consideration when the momentum caused by the holding force is more than the momentum caused by the forces acting in the layer.

9. The method of Claim 1, further comprising repeating the calculating, determining, and comparing after generating the additional auxiliary structure point.

10. The method of Claim 9, wherein the repeating the calculating, determining, and comparing is based on the 3D model as modified by the additional auxiliary structure point.

11. A computer control system having means configured to perform the method of any one of the preceding claims.

## Patentansprüche

1. Ein Verfahren zum Erzeugen von Hilfsstrukturpunkten für ein 3D-Modell, wobei das 3D-Modell als eine Reihe von Schichten zum schichtweisen Drucken definiert ist, wobei das Verfahren **dadurch gekennzeichnet ist, dass** es umfasst:
Auswählen einer Schicht (902) in der Reihe von Schichten zur Prüfung;
Berechnen von Kräften, die in der Schicht wirken, wobei die Kräfte auf die Anziehungskräfte zwischen der Schicht und einer Fertigungsplatte zurückzuführen sind;
Bestimmen eines Schwerpunktes (914) eines in Scheiben geschnittenen Teils des 3D-Modells, wobei der in Scheiben geschnittene Teil des 3D-Modells die eine oder mehrere Schichten vor der Schicht in der Reihe von Schichten umfasst;
Vergleichen des Moments (916) an dem Schwerpunkt, das durch die Kräfte bewirkt wird, die in der Schicht auf ein Moment wirken, das durch eine Haltekraft von Hilfsstrukturpunkten (906) bewirkt wird, die bereits in dem in Scheiben geschnittenen Teil des 3D-Modells vorhanden sind; und
Erzeugen eines zusätzlichen Hilfsstrukturpunktes, wenn das Moment, das durch die Haltekraft bewirkt wird, geringer als das Moment ist, das durch die Kräfte bewirkt wird, die in der Schicht wirken.

2. Das Verfahren nach Anspruch 1, wobei das Erzeugen des zusätzlichen Hilfsstrukturpunktes umfasst:
Berechnen einer Vielzahl von Bereichen auf dem in Scheiben geschnittenen Teil des 3D-Modells, die sich zum Platzieren des zusätzlichen Hilfsstrukturpunktes eignen; und
Auswählen eines der berechneten Vielzahl von Bereichen zum Platzieren des zusätzlichen Hilfsstrukturpunktes.

3. Das Verfahren nach Anspruch 2, weiter umfassend das Berechnen einer Dimension einer Hilfsstruktur in Bezug auf den zusätzlichen Hilfsstrukturpunkt.

4. Das Verfahren nach Anspruch 3, wobei die berechnete Dimension dem Moment zugeordnet wird, das durch die Kräfte bewirkt wird, die in der Schicht wirken.

5. Das Verfahren nach Anspruch 1, weiter umfassend:
Berechnen des Moments am Schwerpunkt, das durch die Kräfte bewirkt wird, die in der Schicht wirken; und
Berechnen des Moments, das durch die Haltekraft der Hilfsstrukturpunkte bewirkt wird, die bereits in dem in Scheiben geschnittenen Teil des 3D-Modells vorhanden sind.

6. Das Verfahren nach Anspruch 5, wobei das Moment, das durch die Haltekraft bewirkt wird, das Moment am Schwerpunkt des in Scheiben geschnittenen Teils des 3D-Modells umfasst.

7. Das Verfahren nach Anspruch 6, wobei das Moment, das durch die Haltekraft bewirkt wird, das Moment umfasst, das durch die Haltekraft in einer X-Ebene, einer Y-Ebene, und einer Z-Ebene bewirkt wird.

8. Das Verfahren nach Anspruch 1, weiter das Auswählen einer neuen Schicht zur Prüfung umfassend, wenn das Moment, das durch die Haltekraft bewirkt wird, höher als das Moment ist, das durch die Kräfte bewirkt wird, die in der Schicht wirken.

9. Das Verfahren nach Anspruch 1, weiter umfassend das Wiederholen des Berechnens, Bestimmens, und Vergleichens nach Erzeugen des zusätzlichen Hilfsstrukturpunktes.

10. Das Verfahren nach Anspruch 9, wobei das Wiederholen des Berechnens, Bestimmens, und Vergleichens auf dem 3D-Modell basiert, wie es durch den zusätzlichen Hilfsstrukturpunkt verändert wird.

11. Ein Computersteuersystem, das Mittel aufweist, die konfiguriert sind, um das Verfahren nach einem der vorstehenden Ansprüche auszuführen.

## Revendications

1. Un procédé de production de points de structure auxiliaire pour un modèle 3D, le modèle 3D étant défini comme une série de couches pour une impression couche par couche, le procédé étant **caractérisé en ce qu'**il comprend les étapes consistant à :
sélectionner une couche (902) dans la série de couches pour considération ;
calculer des forces agissant dans la couche, les forces étant dues à des forces d'adhérence entre la couche et une plate-forme de construction ;
déterminer un point de gravité (914) d'une partie découpée en tranches du modèle 3D, la partie découpée en tranches du modèle 3D comprenant les une ou plusieurs couches avant la couche dans la série de couches ;
comparer une quantité de mouvement (916) au point de gravité provoqué par les forces agissant dans la couche à la quantité de mouvement provoquée par une force de maintien de points de structure auxiliaire (906) déjà présents sur la partie découpée en tranches du modèle 3D ; et
générer un point de structure auxiliaire supplémentaire lorsque la quantité de mouvement provoquée par la force de maintien est inférieure à la quantité de mouvement provoquée par les forces agissant dans la couche.

2. Le procédé selon la revendication 1, dans lequel la génération du point de structure auxiliaire supplémentaire comprend les étapes consistant à :
calculer une pluralité de zones sur la partie découpée en tranches du modèle 3D appropriées pour un placement du point de structure auxiliaire supplémentaire ; et
sélectionner une de la pluralité de zones calculée appropriée pour le placement du point de structure auxiliaire supplémentaire.

3. Le procédé selon la revendication 2, comprenant en outre un calcul d'une dimension d'une structure auxiliaire liée au point de structure auxiliaire supplémentaire.

4. Le procédé selon la revendication 3, dans lequel la dimension calculée est associée à la quantité de mouvement provoquée par les forces agissant dans la couche.

5. Le procédé selon la revendication 1, comprenant en outre les étapes consistant à :
calculer la quantité de mouvement au niveau du point de gravité causée par les forces agissant dans la couche ;
calculer la quantité de mouvement provoquée par la force de maintien de points de structure auxiliaire déjà présents sur la partie découpée en tranches du modèle 3D.

6. Le procédé selon la revendication 5, dans lequel la quantité de mouvement provoquée par la force de maintien comprend la quantité de mouvement au niveau du point de gravité de la partie découpée en tranches du modèle 3D.

7. Le procédé selon la revendication 6, dans lequel la quantité de mouvement provoquée par la force de maintien comprend la quantité de mouvement provoquée par la force de maintien dans un plan X, un plan Y et un plan Z.

8. Le procédé selon la revendication 1, comprenant en outre une sélection d'une nouvelle couche pour considération lorsque la quantité de mouvement provoquée par la force de maintien est supérieure à la quantité de mouvement provoquée par les forces agissant dans la couche.

9. Le procédé selon la revendication 1, comprenant en outre une répétition du calcul, de la détermination et de la comparaison après la génération du point de structure auxiliaire supplémentaire.

10. Le procédé selon la revendication 9, dans lequel la répétition du calcul, de la détermination et de la comparaison est basée sur le modèle 3D tel que modifié par le point de structure auxiliaire supplémentaire.

11. Un système de commande informatique présentant un moyen configuré pour exécuter le procédé selon l'une quelconque des revendications précédentes.
